# EUROPEAN PATENT APPLICATION

(11) **EP 0 940 073 A1**
(43) Date of publication of application: **08.09.1999**
(21) Application number: 99200657.7
(22) Date of filing: 05.03.1999
(51) Int. Cl.: A01G 9/02

(54) **Holder for plants and the like**

(30) Priority: 05.03.1998 NL 1008498
(71) Applicant: EMPEROR PLASTICS B.V., 2461 EW Ter Aar (NL); Bitter, Laembert, 1351 KJ Almere (NL)
(72) Inventor: Keijzer, Franciscus Gerardus Maria, 2461 EW Ter Aar (NL); Bitter, Laembert, 1351 KJ Almere (NL)
(74) Representative: de Bruijn, Leendert C.

(57) **Abstract**

Holder (1) for plants and the like, provided with a circumferential wall (4), a base (3) and a dish (5) with raised rim (9), in which holder (1), in the vicinity of the base (3), at least one opening (7) is provided in the circumferential wall (4) or in the base (3), which opening (7) places the inside of the holder (1) in fluid communication with the dish (5), at least one elevated section of the base (3) lying in a plane which, in normal use, extends approximately at the level of the top side of the raised rim (9) of the dish (5).

## Description

The invention relates to a holder according to the preamble of Claim 1.

A holder of this type is known from French Patent 2,716,070.

Holders of the type described above are used, for example, to grow pot plants. For this purpose, the holders are placed on a floor or the like, for example an ebb and flood base, to which water, optionally containing nutrients and the like, is periodically supplied. The water level is raised to above the top side of the circumferential wall of the dishes, so that the dishes fill up, after which the water is removed from the floor. The pot plants can then make use of the water which is situated on the dishes. When the pot plants move to another end user, for example on a window-sill, a watering can, for example, will be used to introduce water into the dishes.

A drawback of these known holders is that water will remain standing on the dish up to the level of the top edge of the dish, and consequently the same or even a slightly higher water level will be maintained inside the circumferential wall. This means that the bottom ends of the roots of the plant in question will reach almost continuously into the water, something which must be prevented in particular for the sake of the health of the plant in question. Moreover, this makes it considerably more difficult to refresh the water.

The object of the invention is to provide a holder of the type described above in which these drawbacks are avoided, while retaining the advantages of this holder. To this end, a holder according to the invention is characterized by the measures according to Claim 1.

The at least one elevated section of the base of the holder will support at least part of, and preferably all of, the volume of soil or similar growth medium in the pot at a level which lies virtually at the level of the top edge of the dish. When water is poured onto the dish, this will not reach the soil in the container, or at least will reach it only to a very slight extent, even when the dish is completely full. This means that it is easy to prevent roots of the plant always being able to reach into the water. Sufficient water can be taken up into the soil by the suction of the soil when the water level is raised to well above the top edge of the dish, possibly together with displacement of water as a result, for example, of communicating vessels, liquid stresses, adhesion, cohesion and the like. If appropriate, the elevated section may be designed in such a manner that a very small fraction of the soil reaches into the water at least when the dish is completely full, but when the dish is partly empty all the soil will extend above the level of the liquid. This ensures a very successful soil hydrology inside the holder, while holders according to the invention, in contrast to known holders, are particularly suitable for use on ebb and flood bases and for intermediate users and end users.

It will be understood that the base and the raised rim of the dish provide a watertight 'basin'. When the surface on which the holders are disposed is periodically placed underwater and the water is then allowed to drain away (ebb and flood system), a quantity of water will remain behind in the volume delimited by the raised rim of the dish and the base. This quantity is determined by the level of the free end of the raised rim. This quantity of water can be used for further growth of the plant and, as indicated above, the design according to the invention ensures that there is no possibility of roots rotting, of fungal growth and the like.

In an advantageous embodiment, a holder according to the invention is characterized by the measures according to Claim 2.

By providing the base with a number of recesses in at least the elevated section, which recesses are in fluid communication with at least one opening, it is ensured that simple communication is possible between the elevated section and the contents of the dish. Moreover, a holder of this nature is easy to produce and, if necessary, to clean.

In a further refinement, a holder according to the invention is also characterized in that the recesses have dimensions which are such that soil or similar growth medium and roots of a plant which has been placed in the holder are at least substantially unable to reach into the recess.

The use of recesses with relatively small dimensions, at least when measured in the plane of at least the elevated section, provides the advantage that these recesses will remain substantially empty during use, or at least water and/or air can easily flow through them. This provides the additional advantage that it is easy to ventilate the roots from the underside of the holder, which is of benefit to the health of the plants.

In a further advantageous embodiment, a holder according to the invention is characterized in that the base of the holder comprises a series of first raised plateaus and a series of second raised plateaus, the first and second series of plateaus intersecting one another so as to form mutually intersecting channels between the plateaus, which channels are in fluid communication with the at least one opening.

The channels formed between the plateaus in this embodiment provide, in a particularly simple manner, good wetting and ventilation during use, while a holder of this nature is particularly simple to produce. Particularly if the production process selected is injection-moulding, it is then advantageous that it is possible to use relatively thin wall thicknesses which are virtually identical throughout the entire holder, making it possible to avoid stresses and to achieve relatively short cycle times.

In a particularly advantageous embodiment, a holder according to the invention is characterized in that at least the one opening extends substantially in the circumferential wall, below a plane of the elevated section of the base.

Positioning the at least one opening substantially in the circumferential wall, below the plane defined by the elevated section of the base, provides the advantage that the openings are completely covered, as seen from one side, by the raised rim of the dish. This has a positive effect on the appearance of the holder and, moreover, the entire opening will extend below the water level in the dish, even if this dish is not filled all the way up to the rim. Moreover, this provides simple protection against growth medium, such as soil, being able to pass through the openings onto the dish.

The dish can be produced separately from the holder and coupled to the holder prior to or during use. However, it is equally possible to produce the dish as a single part with the rest of the holder.

Producing the holder as a single part, i.e. with an integral dish, provides the advantage that the holder is made even easier to produce, since it is possible to dispense with assembly operations. Moreover, this provides the advantage that the correct dish is always used correctly for the correct holder. Assembly errors are thus eliminated. A relatively simple mould can be employed. The dish is preferably folded over automatically when being ejected or removed from the mould, since this makes it possible to avoid the need for further operations, although it is also possible to fold the dish over into the position of use only just before use.

The invention also relates to a method for producing a holder according to the invention, in which method the production of the raised rim of the dish, in particular, can be carried out in various ways. Firstly, it is possible, when the various parts of the holder are injection-moulded as a single unit, to produce the raised rim in a folded-down position. It is then necessary to fold this rim back up. This folding operation can be facilitated by arranging an integral hinge between the rim of the dish and the base/circumferential wall of the holder. This prevents the problems of the product produced by injection-moulding not being demouldable.

According to a different approach, the raised rim of the dish is designed in such a manner that it is slightly raised immediately after injection-moulding. The upwards projection is such that demoulding is still readily possible. During further cooling, shrinkage will cause the rim to project further upwards. It will be understood that it is necessary, in this design, for the dimensions of the raised rim to be particularly accurate in order to make full use of the effect of the shrinkage which occurs in the plastic material. This is made possible by designing the raised rim to widen towards its end.

The product is removed from the mould at, for example, approximately 80°C, and shrinkage takes place at approximately 20-60°C, and more particularly 30°C, so that further curvature of the raised rim is produced. An example which may be mentioned for the extent of the taper is an increase in the wall thickness of the raised rim from the attachment to the base or circumferential wall to the free end of this rim of from 20-100% of the original wall thickness.

It will be understood that the above-described method for the production of a rim of a dish can be used for any plant holder, i.e. also for holders which are not provided with the elevated section as described in Claim 1 of the present application.

In order to clarify the invention, a number of embodiments of a holder and method according to the invention will be explained in more detail with reference to the drawing, in which:
Fig. 1 shows a diagrammatic, sectional, side view of a holder according to the invention, in a first embodiment;
Fig. 2 shows an enlarged detail of part of the cross section in accordance with Fig. 1;
Fig. 3 shows a plan view of a holder according to the invention in accordance with Figs. 1 and 2;
Fig. 4 shows a first alternative embodiment of a holder according to the invention;
Fig. 5 shows a side view of a holder in accordance with Fig. 1 with the base folded down; and
Fig. 6 shows a side view of a second alternative embodiment of a holder according to the invention.

In this description, corresponding parts have corresponding reference numerals. In this description, it is assumed that a holder is being used as a pot for a houseplant, although numerous other applications of this holder are, of course, possible.

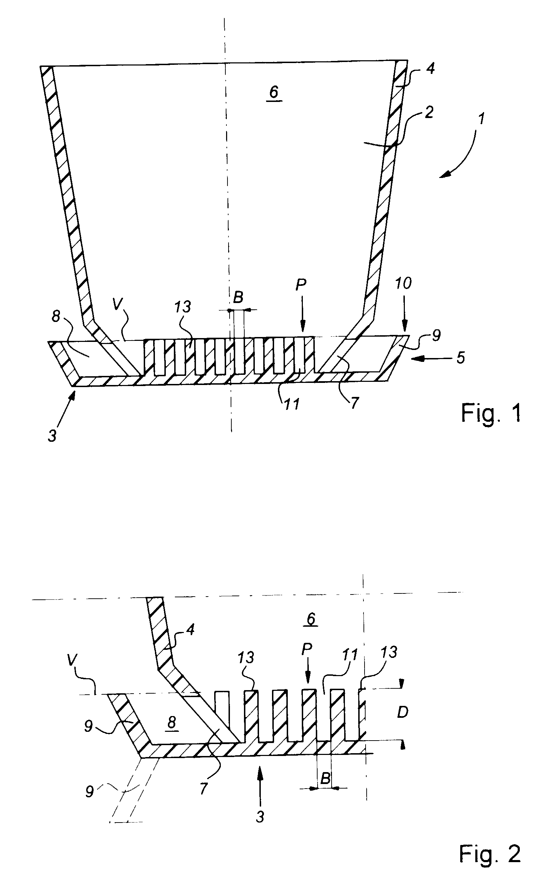

Fig. 1 shows a sectional side view of a holder 1, comprising a plant pot 2, provided with a base 3 and a circumferential wall 4, which plant pot 2 is disposed with its base 3 on a dish 5. The dish 5 forms an integral part ofthe holder 1, as shown in more detail in Fig. 2.

The plant pot 2 is provided with an internal space 6 which, via openings 7 in the circumferential wall 4, is in open communication with the holding space 8 of the dish 5, inside the raised rim 9 of this dish. The top side 10 of the dish 5 defines a plane V. The openings 7 extend below this plane V.

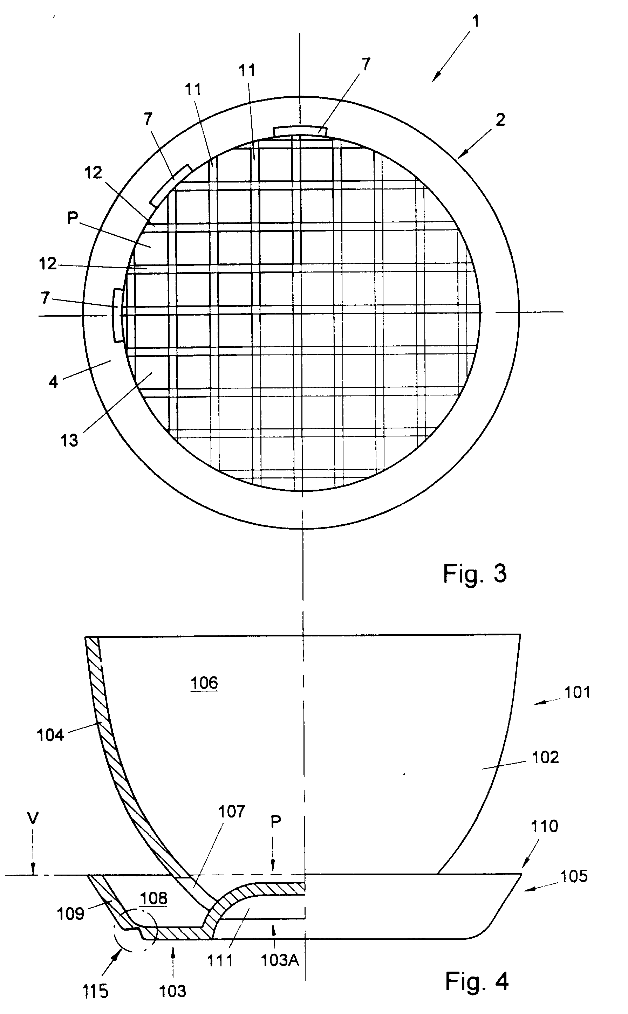

The base 3 is designed in such a manner that its top surface P approximately coincides with the abovementioned plane V. A series of first channel-like recesses 11, which extend parallel to one another, is provided in the top surface P, and a second series of channel-like recesses 12, which likewise extend parallel to one another and extend at right angles to the direction of the first channel-like recesses 11, is also provided in the top surface P, as shown in Fig. 3. Therefore, the channel-like recesses 11, 12 delimit small, substantially square islands 13, the top sides of which define the top surface P. The channel-like recesses 11, 12 have a width B and a depth D which are selected in such a manner that the channel-like recesses 11, 12, during normal use, are not filled, or at least are not completely filled, with soil or similar growth medium, and moreover such that roots of the plant are prevented from extending into the channel-like recesses. This means that the channel-like recesses 11, 12 remain substantially available for transporting and storing water, nutrients and/or air to the top surface P and therefore to the roots of the plant, without these roots or the growth medium being in constant contact with water.

A holder 1 in accordance with Fig. 1 can be used as follows.

To grow plants, the holder 1 is placed with its base 3 on an ebb and flood base, after which water is cyclically introduced onto the ebb and flood base to a level which lies above the plane V and then discharged again. When the water reaches above the plane V, the holding space 8 will fill up, as will the channel-like recesses 11, 12. This water remains behind in the holder 1 even when the water is discharged from the ebb and flood base. The plant can then, when required, withdraw water from the channel-like recesses 11, 12 and, if appropriate, from the holding space 8, while permanent contact with the water is easily prevented. It will be clear that water can also be introduced into the holding space 8 in other ways, for example using a watering can or similar means, or with the aid of sprayer devices or the like above the plant.

Fig. 4 shows an alternative embodiment of a holder 101 according to the invention, provided with an integral dish 105 and an elevated base part 103A. The internal space 106 inside the circumferential wall 102 is again in fluid communication with the holding space 108 of the dish 105 via the openings 107. The top side 110 of the raised rim 109 again defines a plane V which lies slightly above the top surface P. A number of channels 111 which extend in a single direction and, for example, in meandering form, next to one another, and are connected to at least one opening 107, are again arranged in the base 103 with the aid of profiling. An integral hinge 115 is arranged between the rim 109 of the dish and the base 103. The holder described with reference to Fig. 3 is produced with rim 109 folded downwards (as seen in Fig. 3). The integral hinge 115 allows this rim to be folded upwards in a particularly simple manner. A holder 101 of this type can be used in the manner described above. The difference in level between the planes V and P provides the advantage that when the dish is completely full a relatively small fraction of the growth medium in the internal space 106 is always in direct contact with the water, while when the dish 105 is partially empty this direct contact is avoided.

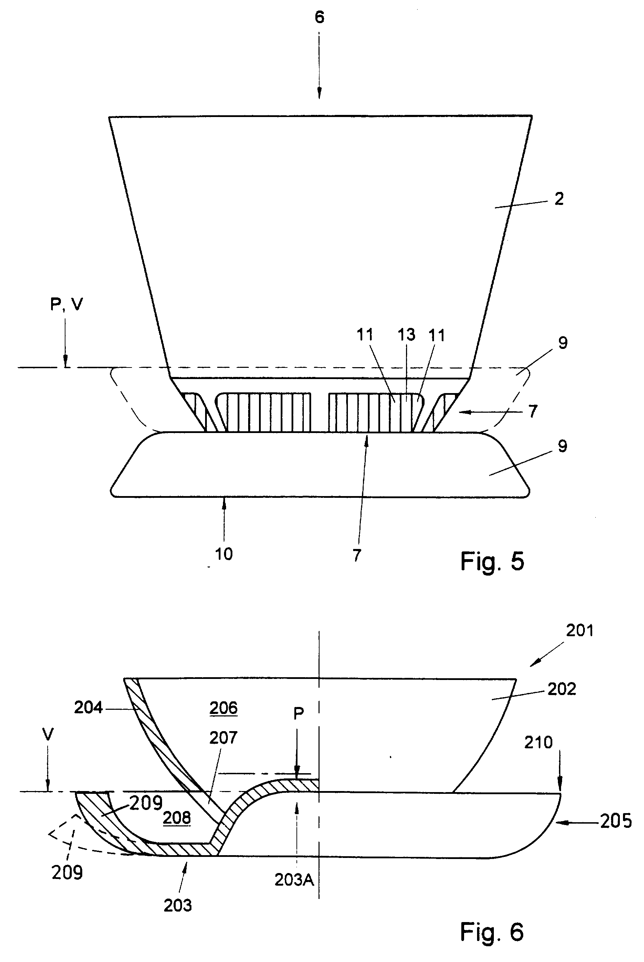

Fig. 5 shows a holder in accordance with Fig. 1, in side view, with the dish 5 folded downwards. The holder is injection-moulded in this state. It is in this case possible to introduce mould parts from the side so as to form at least the openings 7. The small islands 13 and the channels 11 which lie between them can be seen through the openings 7. In view of the position of the openings 7, it is not possible to see through the openings 7 during normal use. In the embodiments shown, the openings 7, 107 will themselves generally be impossible or difficult to see, and this has a beneficial effect on the appearance of the holder. During demoulding of the holder, the dish 5, 105 is folded back, in such a manner that the raised rim extends from the base 3 in the same direction as the circumferential wall 4, 104. This makes the holder ready for immediate use.

Fig. 6 shows a second alternative embodiment of a holder 202 according to the invention, which is provided with an integral dish 205 and an elevated base section 203A. The internal space 206 is again in fluid communication with the holding space 208. The plane V defined by the top side 210 ofthe raised rim 209 lies slightly below the top surface P of the base 203.

In the variant shown here, the rim 209 of the dish is of tapering design. In the vicinity of the end, the wall thickness is approximately 1.3 mm, while in the vicinity of the attachment to the base 203, the wall thickness is approximately 0.3 mm. It will be understood that such tapering outwardly can be used for all the previous variants and all other variants which could be considered by a person skilled in the art, even without an elevated base.

This curvature makes it advantageously possible to make use of shrinkage which occurs after the injection-moulded holder is removed from the mould. The holder is in the position shown in dashed lines immediately after it is demoulded. In this position, demoulding is comparatively simple. After shrinkage and ambient cooling, the position shown in continuous lines is reached. A raised rim designed with such a curvature could not be removed from a mould without special measures.

In this embodiment, the difference in levels between the planes V and P offers the advantage that when the dish is completely full all the growth medium in the internal space 206 always extends above the plane V, thus preventing plant roots from extending continuously into the water. In an embodiment of this type, the water is again raised, on an ebb and flood base, at least to above the plane P, or the plant is provided with water from the top, so that the growth medium absorbs sufficient water, after which the surplus water can flow out to the holding space 208 until it lies below the plane P. An embodiment of this type is particularly simple to produce. In addition, an embodiment of this nature may also be provided with channel-like recesses. In any pot covered by the invention, the plane P may always lie slightly below, level with or slightly above the plane V, depending on the desired contact between water and growth medium.

The invention is in no way limited to the embodiments covered by the description and the drawing. Numerous variations to these embodiments are possible.

For example, it is possible to use an insert piece to form the elevated section of the base, which insert piece may, if appropriate, be fixedly connected to the base. An insert piece of this nature may, for example, be designed in the form of a grid. Furthermore, the openings may lie entirely or partially in the plane P or, for example, in a plane which extends parallel thereto, in such a manner that the openings are essentially open towards the bottom. This design is even more successful than that with the openings in an inclined surface in preventing the openings from being visible from the outside. Obviously, the holder may have any desired external shape, for example may be round, elliptical, rectangular or polygonal. Also, a holder according to the invention may be formed in some other way, for example using moulds with suitable cores, slides and the like, with the result that, for example, the holding space 8 of the dish 5 is formed by die parts which extend through substantially encircling openings, partitions in the dish being formed between these die parts. The dish may substantially adjoin the circumferential wall of the holder, in such a manner that water can flow through a relatively narrow annular gap between dish and holder.

These and numerous similar variations are deemed to lie within the scope of the invention.

## Claims

1. Holder (1,101,201) for plants and the like, provided with a circumferential wall (4,104,204), a base (3,103,203) and a dish (5,105,205), the said circumferential wall being provided, in the vicinity of the said base, with at least one opening (7,107,207), which opening, in the position of use, extends beneath the free end of the raised rim of the said dish, characterized in that the said base is provided with an elevated section, the top (P) of which lies in a plane which, in the position of use of the said holder, extends approximately at the level (V) of the free end of the raised rim of the said dish, or above this level, this level parts comprising a single part produced by injection-moulding.

2. Holder according to Claim 1, in which the base is provided with a number of recesses in the elevated section, which recesses are in fluid communication with the said at least one opening.

3. Holder according to Claim 2, in which the recesses have dimensions which are such that soil or similar growth medium and roots of a plant which has been placed in the holder are at least substantially unable to reach into the recess.

4. Holder according to Claim 2 or Claim 3, in which the elevated section of the base of the holder is designed substantially in the form of a grid.

5. Holder according to Claim 4, in which the base of the holder comprises a series of first raised plateaus and a series of second raised plateaus, the first and second series of plateaus intersecting one another so as to form mutually intersecting channels between the plateaus, which channels are in fluid communication with the at least one opening.

6. Holder according to one of the preceding claims, in which the at least one opening extends substantially in the circumferential wall, below a plane of the elevated section of the base.

7. Holder according to one of the preceding claims, in which the or each opening extends in an inwardly inclined part of the circumferential wall, in such a manner that in normal use it or they is/are at least largely out of sight of the user.

8. Holder according to one of the preceding claims, in which the connection between dish and holder/circumferential wall comprises an integral hinge (115).

9. Holder according to one of the preceding claims, in which the said dish rim (209) is designed so as to widen towards its end.
